# EUROPEAN PATENT APPLICATION

(11) **EP 4 296 389 A1**
(43) Date of publication of application: **27.12.2023**
(21) Application number: 22756033.1
(22) Date of filing: 08.02.2022
(51) Int. Cl.: C22B 26/12, C22B 3/06, C22B 3/22, C22B 3/44

(54) **LI RECOVERY METHOD AND RECOVERY APPARATUS**

(30) Priority: 17.02.2021 JP 2021023221
(71) Applicant: Mitsubishi Materials Corporation, Tokyo 100-8117 (JP)
(72) Inventor: KURAMOCHI, Kenta, Iwaki-shi, Fukushima 971-8101 (JP); MIYAZAKI, Atsushi, Iwaki-shi, Fukushima 971-8101 (JP); MURAOKA, Hiroki, Iwaki-shi, Fukushima 971-8101 (JP)
(74) Representative: Gille Hrabal Partnerschaftsgesellschaft mbB Patentanwälte
(86) International application number: PCT/JP2022/004930
(87) International publication number: WO 2022/176712

(57) **Abstract**

A Li recovery method includes: an acid leaching step of adding an acid to a battery slag to produce a leachate; a first addition step of adding a Ca content to the leachate to produce a first processed product; a post-first-addition filtration step of filtering the first processed product to be separated into a first processing filtrate and a first processing residue; a second addition step of adding sodium carbonate to the first processing filtrate to produce a second processed product; a post-second-addition filtration step of filtering the second processed product to be separated into a second processing filtrate and a second processing residue; heating the second processing filtrate; blowing carbon dioxide into the heated second processing filtrate to produce a third processed product; and a post-carbonation filtration step of filtering the third processed product to be separated into a third processing filtrate and a third processing residue.

## Description

### [Technical Field]

The present invention relates to a Li recovery method and a Li recovery device.

Priority is claimed on Japanese Patent Application No. 2021-023221, filed February 17, 2021, the content of which is incorporated herein by reference.

### [Background Art]

In the following Patent Documents, it is described as technologies that an acid is added to a battery slag recovered from lithium ion battery waste to produce a leachate, sodium hydroxide or calcium hydroxide (additive) is added to the leachate to produce a processed product, the processed product is solid-liquid separated to separate a filtrate (lithium dissolution solution) from a residue, and a Li content contained in the filtrate is carbonated and recovered.

However, in the technology described in Patent Document 1 below, when sodium hydroxide is used as an additive, a large amount of a Na content is mixed therein, so that a washing load of the Na content during production of lithium carbonate increases. On the other hand, when calcium hydroxide is used as an additive, a Ca content is carbonated together with a Li content during the production of lithium carbonate, and insoluble calcium carbonate is mixed into the lithium carbonate produced from this filtrate. Therefore, it is difficult to effectively use the recovered Li content. In addition, in Patent Document 2, when calcium hydroxide is used as an additive, a Ca content is removed by carbonization and re-dissolution, Ca content precipitation, and solid-liquid separation, and a process thereof is complicated.

### [Citation List]

### [Patent Documents]

[Patent Document 1]
   Japanese Unexamined Patent Application, First Publication No. 2019-160429 (A)
[Patent Document 2]
   Japanese Unexamined Patent Application, First Publication No. 2019-11518 (A)

### [Summary of Invention]

### [Technical Problem]

An objective of the present invention is to separate and recover a Li content contained in a battery slag from a Na content and a Ca content contained in an additive.

### [Solution to Problem]

A Li recovery method according to an aspect of the present invention (hereinafter, referred to as a "Li recovery method of the present invention") includes: an acid leaching step of adding an acid to a battery slag containing a Li content to produce a leachate; a first addition step of adding a first additive containing a Ca content to the leachate and neutralizing the leachate to produce a first processed product; a post-first-addition filtration step of filtering the first processed product to be separated into a first processing filtrate containing a Li content and a first processing residue; a second addition step of adding a second additive containing sodium carbonate to the first processing filtrate to produce a second processed product; a post-second-addition filtration step of filtering the second processed product to be separated into a second processing filtrate containing a Li content and a Na content and a second processing residue containing a Ca content; a heating step of heating the second processing filtrate; a carbonation step of blowing carbon dioxide into the heated second processing filtrate or adding a carbonate to the heated second processing filtrate to produce a third processed product; and a post-carbonation filtration step of filtering the third processed product to be separated into a third processing filtrate containing a Na content and a third processing residue containing a Li content.

According to the Li recovery method of the above-described aspect, the Li content contained in the battery slag can be separated from the Na content and the Ca content contained in the additive, and recovered. As regards this point, specific description is as follows.

According to the Li recovery method of the above-described aspect, the neutralization is carried out with the first additive containing Ca, so that the neutralization can be carried out at a lower cost as compared with the case of using a Na salt, and mixing of Na, which is difficult to be separated from Li, can be avoided. Sodium carbonate is used as the second additive in order to remove Ca derived from the first additive containing a Ca salt; however, the added amount of Na is smaller than the amount of a Na salt required for neutralization. Therefore, a load of separating Li and Na can be suppressed.

In addition, according to the Li recovery method of the above-described aspect, it is possible to efficiently separate only the Ca content (which has been contained in the first additive) contained in the first processing filtrate in the second addition step. The reason is that sodium carbonate with high solubility is used as the second additive; the Ca content reacts with carbonate ions even at room temperature and precipitates as calcium carbonate, but the temperature at which the Li content is produced as lithium carbonate is 50°C or higher. As a result, the Ca content contained in the second processed product (which has been produced from the first processing filtrate) can be efficiently removed in the post-second-addition filtration step. In this manner, the Li content contained in the battery slag can be separated from the Ca content contained in the first additive.

In addition, according to the Li recovery method of the above-described aspect, it is possible to efficiently carbonate the Li content (which has been contained in the battery slag) in the second processing filtrate in the carbonation step. As a result, the Li content contained in the third processed product (which has been produced from the second processing filtrate) can be efficiently recovered in the post-carbonation filtration step. In this manner, the Li content contained in the battery slag can be separated from the Na content contained in the second additive. The sodium carbonate used as the second additive in the present invention may be a hydrate.

The Li recovery method of the present invention may include a washing step of washing the first processing residue with a washing solution containing a Ca content, and a post-washing filtration step of filtering a mixture of the washing solution and the first processing residue to be separated into a washing filtrate and a washing residue. In the second addition step, the second additive may be added to a mixed solution of the first processing filtrate and the washing filtrate.

With satisfaction of this feature, the Li content adhering to the first processing residue can be washed off by the washing solution without redissolving the hydroxide contained in the first processing residue (hydroxide produced in the first addition step). As a result, this Li content is contained in the washing filtrate. Accordingly, both this Li content and the Li content contained in the first processing filtrate can be recovered.

A Li recovery device according to another aspect of the present invention (hereinafter, referred to as a "Li recovery device of the present invention") includes: an acid leaching device configured to add an acid to a battery slag containing a Li content to produce a leachate; a first addition device configured to add a first additive containing a Ca content to the leachate and neutralize the leachate to produce a first processed product; a post-first-addition filtration device configured to filter the first processed product to be separated into a first processing filtrate containing a Li content and a first processing residue; a second addition device configured to add a second additive containing sodium carbonate to the first processing filtrate to produce a second processed product; a post-second-addition filtration device configured to filter the second processed product to be separated into a second processing filtrate containing a Li content and a Na content and a second processing residue containing a Ca content; a heating device configured to heat the second processing filtrate; a carbonator configured to blow carbon dioxide into the heated second processing filtrate or add a carbonate to produce a third processed product; and a post-carbonation filtration device configured to filter the third processed product to be separated into a third processing filtrate containing a Na content and a third processing residue containing a Li content.

With satisfaction of this feature, the same effects as those of the first aspect can be produced.

### [Advantageous Effects of Invention]

As described above, according to the present invention, the Li content contained in the battery slag can be separated from the Na content and the Ca content contained in the additive, and recovered.

### [Brief Description of Drawings]

FIG. 1 is an explanatory diagram showing a procedure of a Li recovery method according to an embodiment of the present invention.
FIG. 2 is an explanatory diagram showing a Li recovery device according to an embodiment of the present invention.

### [Description of Embodiments]

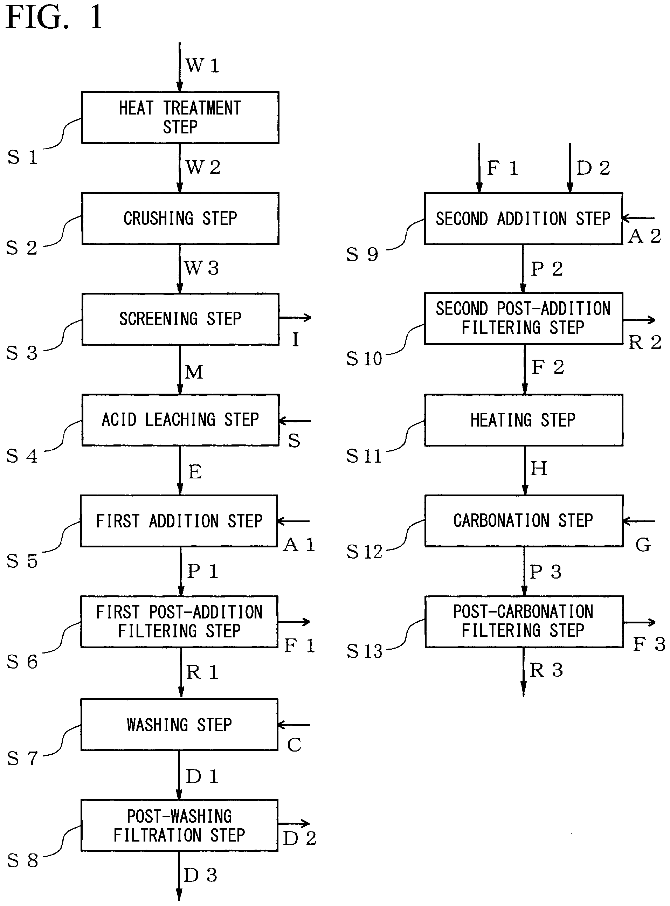

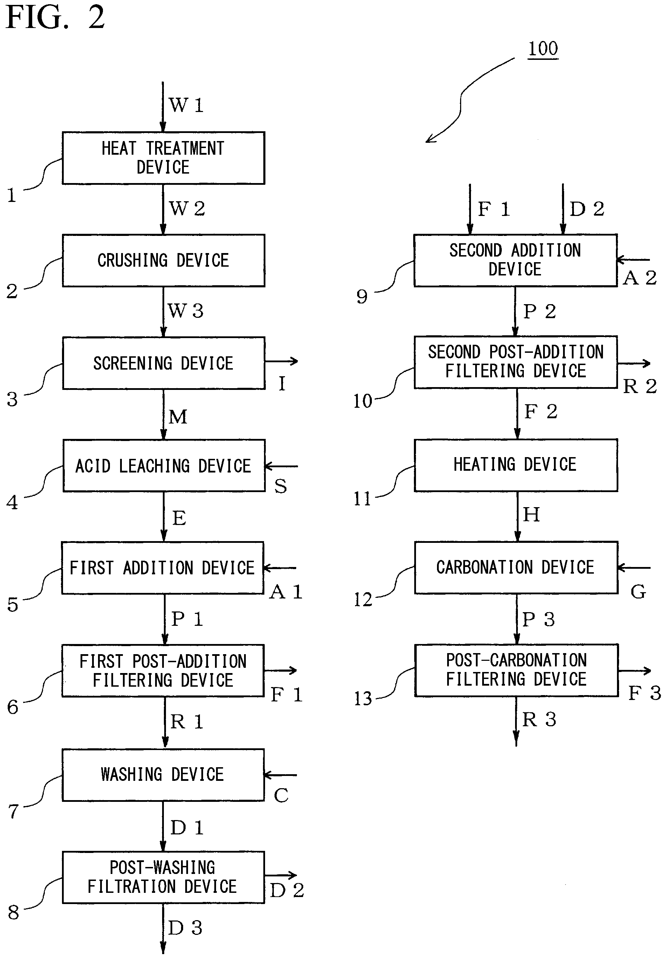

A Li recovery method and a Li recovery device according to an embodiment of the present invention will be described. A Li recovery device 100 shown in FIG. 2 is a device for carrying out the Li recovery method shown in FIG. 1. Hereinafter, when treating a so-called lithium ion battery waste as the battery waste will be described as an example.

As shown in FIG. 1, this recovery method includes a heat treatment step S1, a crushing step S2, a screening step S3, an acid leaching step S4, a first addition step S5, a post-first-addition filtration step S6, a washing step S7, a post-washing filtration step S8, a second addition step S9, a post-second-addition filtration step S10, a heating step S11, a carbonation step S12, and a post-carbonation filtration step S13.

As shown in FIG. 2, the recovery device 100 includes a heat treatment device 1, a crushing device 2, a screening device 3, an acid leaching device 4, a first addition device 5, a post-first-addition filtration device 6, a washing device 7, a post-washing filtration device 8, a second addition device 9, a post-second-addition filtration device 10, a heating device 11, a carbonator 12, and a post-carbonation filtration device 13.

The heat treatment step S1 is a step of heat-treating a lithium ion battery waste W1 by the heat treatment device 1. The heat treatment is performed, for example, in a superheated steam and/or nitrogen atmosphere at 500°C for 1 hour. In this step, an electrolytic solution contained in the waste W1 is heated and volatilized to detoxify the waste W1. The waste W1 contains metals such as a Li content, a Ni content, a Co content, and an Al content. In the heat treatment step S1, the waste W1 is heated, thereby obtaining a waste W2.

The crushing step S2 is a step of crushing the heated waste W2 by the crushing device 2 to obtain a waste W3. For example, a twin-screw crusher and a hammer crusher can be used as the crushing device 2.

The screening step S3 is a step of removing an impurity I from the waste W3 by the screening device 3 to recover a battery slag M. A sieve such as a vibration sieve can be used as the screening device 3. When the sieve is used, for example, a sieve having a sieve mesh of about 0.5 mm is used, and the content that has passed through the sieve is the battery slag M and the remaining content of the sieve is metal pieces I. The battery slag M is mixed powder having a positive-electrode active material and a negative-electrode active material contained in the waste W3. The metal pieces I have aluminum pieces and copper pieces included in the battery waste W3.

In the acid leaching step S4, an acid S is added to the battery slag M in the acid leaching device 4, thereby leaching metals (Li content, Ni content, Co content, Al content, and other metal contents) contained in the battery slag M into the acid S. In the acid leaching step S4, a leachate E which is a mixed solution of the battery slag M and the acid S is produced. For example, sulfuric acid can be used as the acid S. When the sulfuric acid is used as the acid S, hydrogen peroxide is preferably added to the battery slag M in order to efficiently leach the metals contained in the battery slag M into the sulfuric acid. Furthermore, when sulfuric acid is used as the acid S in order to efficiently leach the metals contained in the battery slag M into the sulfuric acid, it is preferable that the leachate E is stirred for 3 hours or longer while heating the leachate E to 40°C or higher by using sulfuric acid having a concentration of 1.5 mol/l or more.

The first addition step S5 is a step of adding the first additive A1 to the leachate E in the first addition device 5 and neutralizing the leachate E to produce hydroxides of Ni, Co, and Al contained in leachate E. In the first addition step S5, the first processed product P1, which is a mixture of the leachate E and the first additive A1 is produced. A Ca content is used as the first additive A1. Specifically, for example, calcium hydroxide or an aqueous calcium hydroxide solution can be used.

The post-first-addition filtration step S6 is a step of filtering, in the post-first-addition filtration device 6, the first processed product P1 composed of a liquid component and a solid component to be separated into a first processing filtrate F1, which is a liquid component, and a first processing residue R1, which is a solid component. The first processing residue R1 contains hydroxides of Ni, Co, and Al. The first processing filtrate F1 contains a Li content and a Ca content (derived from the first additive A1). The first processing residue R1 contains a small amount of the Li content. The first processing filtrate F1 contains almost no hydroxides of Ni, Co, and Al.

The washing step S7 is a step of washing, in the washing device 7, the first processing residue R1 by a washing solution C and dissolving the Li content contained in the first processing residue R1 in the washing solution C without redissolving the hydroxides of Ni, Co, and Al contained in the first processing residue R1 in the washing solution C. In the washing step S7, a washing slurry D1, which is a mixture of the washing solution C and the first processing residue R1, is produced. Here, as the washing solution C, a solution containing a Ca content is used. Specifically, for example, an aqueous calcium hydroxide solution can be used. The washing solution C preferably has a pH of 10 or more in order not to dissolve a Mn content and other metal contents contained in the first processing residue R1.

The post-washing filtration step S8 is a step of filtering, in the post-washing filtration device 8, the washing slurry D1 composed of a liquid component and a solid component to be separated into a washing filtrate D2, which is a liquid component, and a washing residue D3, which is a solid component. The washing filtrate D2 contains a Li content. The washing residue D3 contains hydroxides of Ni, Co, and Al. The washing filtrate D2 contains almost no Ni content, Co content, and Al content. The washing residue D3 contains almost no Li content.

The second addition step S9 is a step of adding, in the second addition device 9, the second additive A2 to a mixed solution of the first processing filtrate F1 obtained in the post-first-addition filtration step S6 and the washing filtrate D2 obtained in the post-washing filtration step S8 and carbonating a Ca content contained in this mixed solution. In the second addition step S9, a second processed product P2, which is a mixture of this mixed solution and the second additive A2 is produced.

As the second additive A2, either sodium carbonate or sodium carbonate hydrate is used, or a combination thereof is used. Here, preferably, in the second addition step S9, the second additive A2 is added to the mixed solution at lower than 50°C (more preferably the mixed solution at 20°C or higher and 30°C or lower). As a result, the Ca content contained in this mixed solution can be efficiently carbonated.

The post-second-addition filtration step S10 is a step of filtering, in the post-second-addition filtration device 10, the second processed product P2 composed of a liquid component and a solid component to be separated into a second processing filtrate F2, which is a liquid component, and a second processing residue R2, which is a solid component. The second processing residue R2 contains a Ca content (calcium carbonate), and the second processing filtrate F2 contains a Li content and a Na content. In addition, the second processing residue R2 contains almost no Li content, and the second processing filtrate F2 contains almost no Ca content. This Na content is derived from the second additive A2.

The heating step S11 is a step of heating the second processing filtrate F2 to 50°C or higher (preferably 60°C or higher and 80°C or lower) by the heating device 11 in order to carbonate the Li content in the subsequent carbonation step S12. In the heating step S11, the second processing filtrate F2 is heated to produce a high-temperature filtrate H.

The carbonation step S12 is a step of blowing a carbon dioxide G into the high-temperature filtrate H and carbonating a Li content contained in the high-temperature filtrate H, in the carbonator 12. In the carbonation step S12, a third processed product P3, which is a mixture of the high-temperature filtrate H and the carbon dioxide G, is produced. Instead of blowing the carbon dioxide G into the high-temperature filtrate H, or while blowing the carbon dioxide G into the high-temperature filtrate H, carbonate (for example, sodium carbonate or sodium carbonate hydrate) can be added to the high-temperature filtrate H.

The post-carbonation filtration step S13 is a step of filtering, in the post-carbonation filtration device 13, the third processed product P3 composed of a liquid component and a solid component to be separated into a third processing filtrate F3, which is a liquid component, and a third processing residue R3, which is a solid component. The third processing filtrate F3 contains a Na content, and the third processing residue R3 contains a Li content (lithium carbonate). The third processing filtrate F3 contains almost no Li content, and the third processing residue R3 contains almost no Na content.

Next, a test example in which the effect of the washing step has been ascertained in the Li recovery method and the Li recovery device according to the embodiment of the present invention will be described. In the following, each step in the test example will be described in correspondence with the above-described embodiment. In addition, in the following, matters that are not particularly described are the same as those of the above-described embodiment.

### [Test Example 1]

### (Heat Treatment Step to Acid Leaching Step)

100 ml of sulfuric acid (concentration of 2 mol/l) and 5 ml of a hydrogen peroxide solution (concentration of 30% by mass) are added to 14.5 g of a battery slag recovered from a lithium ion secondary battery waste (battery waste) to produce a leachate. This leachate was stirred at 60°C for 3 hours. Then, the leachate was allowed to cool to room temperature.

### (First Addition Step)

An aqueous calcium hydroxide solution was added to the leachate after allowed to cool in the acid leaching step to produce a first processed product. The addition of the aqueous calcium hydroxide solution was carried out until the pH of the first processed product was 10.0 or higher.

### (Post-first-addition Filtration Step)

The first processed product obtained in the first addition step was filtered to be separated into a first processing filtrate and a first processing residue.

### (Washing Step)

The first processing residue obtained in the post-first-addition filtration step was subjected to cake washing with 100 ml of an aqueous calcium hydroxide solution (concentration of 0.01 mol/l, pH of 12) for 1 hour at room temperature. As a result, a washing slurry, which was a mixture of this first processing residue and the aqueous calcium hydroxide solution was obtained.

### (Post-washing Filtration Step)

The washing slurry obtained in the washing step was filtered and separated into a washing filtrate and a washing residue.

In the present test example, a first Li recovery rate and a second Li recovery rate, which are defined as follows, were calculated. The first Li recovery rate was defined as [mass of Li content contained in the first processing filtrate/mass of Li content contained in the leachate × 100]. The second Li recovery rate was defined as [total mass of Li contents contained in the first processing filtrate and the washing filtrate/mass of Li content contained in the leachate × 100]. The first Li recovery rate was 45.6%. In addition, the second Li recovery rate increased to 90.5%. A composition of each solution was measured by using ICP-AES.

### [Test Example 2]

In the washing step, each step was carried out in the same manner as in Test Example 1 except that repulping for 1 hour was carried out three times with 100 ml of an aqueous calcium hydroxide solution (concentration of 0.01 mol/l, pH of 12) at room temperature. The second Li recovery rate was 79.3% for repulping once, 87.6% for repulping two times, and 90.2% for repulping three times. Table 1 shows the results of the composition analysis of each solution and the Li recovery rate.

**[Table 1]**

| g/L | Ni | Co | Mn | Li | Al | Cu | Na | Ca | Li recovery rate |
|---|---|---|---|---|---|---|---|---|---|
| Leachate | 14.83 | 16.96 | 13.42 | 6.82 | 4.65 | 1.36 | 0.15 | 0.06 | - |
| First processing filtrate | <0.01 | <0.01 | <0.01 | 6.94 | <0.01 | <0.01 | 0.21 | 0.43 | 52.7 |
| Washing filtrate ① | <0.01 | <0.01 | <0.01 | 1.95 | <0.01 | <0.01 | <0.01 | 0.41 | 79.3 |
| Washing filtrate ② | <0.01 | <0.01 | <0.01 | 0.59 | <0.01 | <0.01 | <0.01 | 0.46 | 87.6 |
| Washing filtrate ③ | <0.01 | <0.01 | <0.01 | 0.18 | <0.01 | <0.01 | <0.01 | 0.55 | 90.2 |

As described above, according to the above-described embodiment, the Li content contained in the battery slag M can be separated from the Ca content (derived from the first additive A1) in the post-second-addition filtration step S10, and separated from the Na content (derived from the second additive A2) in the post-carbonation filtration step S13 to recover the Li content as the third processing residue R3. In addition, the Li content contained in the first processing residue R1 is leached into the washing solution C to recover the Li content; thereby, the Li content contained in the battery slag M can be recovered more efficiently.

In addition, in the above-described embodiment, the heat treatment step S1, the crushing step S2, the screening step S3, the washing step S7, and the post-washing filtration step S8 can be appropriately omitted.

### [Industrial Applicability]

It is possible to separate and recover the Li content contained in the battery slag from the Na content and the Ca content contained in the additive.

### [Reference Signs List]

1: Heat treatment device
2: Crushing device
3: Screening device
4: Acid leaching device
5: First addition device
6: Post-first-addition filtration device
7: Washing device
8: Post-washing filtration device
9: Second addition device
10: Post-second-addition filtration device
11: Heating device
12: Carbonator
13: Post-carbonation filtration device

## Claims

1. A Li recovery method comprising:
an acid leaching step of adding an acid to a battery slag containing a Li content to produce a leachate;
a first addition step of adding a first additive containing a Ca content to the leachate and neutralizing the leachate to produce a first processed product;
a post-first-addition filtration step of filtering the first processed product to be separated into a first processing filtrate and a first processing residue;
a second addition step of adding a second additive containing sodium carbonate and/or sodium carbonate hydrate to the first processing filtrate to produce a second processed product;
a post-second-addition filtration step of filtering the second processed product to be separated into a second processing filtrate containing a Li content and a Na content and a second processing residue containing a Ca content;
a heating step of heating the second processing filtrate;
a carbonation step of blowing carbon dioxide into the heated second processing filtrate or adding a carbonate to the heated second processing filtrate to produce a third processed product; and
a post-carbonation filtration step of filtering the third processed product to be separated into a third processing filtrate containing a Na content and a third processing residue containing a Li content.

2. The Li recovery method according to Claim 1, further comprising:
a washing step of washing the first processing residue with a washing solution containing a Ca content; and
a post-washing filtration step of filtering a mixture of the washing solution and the first processing residue to be separated into a washing filtrate and a washing residue,
wherein in the second addition step, the second additive is added to a mixed solution of the first processing filtrate and the washing filtrate.

3. A Li recovery device comprising:
an acid leaching device configured to add an acid to a battery slag containing a Li content to produce a leachate;
a first addition device configured to add a first additive containing a Ca content to the leachate and neutralize the leachate to produce a first processed product;
a post-first-addition filtration device configured to filter the first processed product to be separated into a first processing filtrate and a first processing residue;
a second addition device configured to add a second additive containing sodium carbonate and/or sodium carbonate hydrate to the first processing filtrate to produce a second processed product;
a post-second-addition filtration device configured to filter the second processed product to be separated into a second processing filtrate containing a Li content and a Na content and a second processing residue containing a Ca content;
a heating device configured to heat the second processing filtrate;
a carbonator configured to blow carbon dioxide into the heated second processing filtrate or add a carbonate to produce a third processed product; and
a post-carbonation filtration step of filtering the third processed product to be separated into a third processing filtrate containing a Na content and a third processing residue containing a Li content.
